Europäisches Patentamt

(19) European Patent Office

Office européen des brevets

(11) Publication number:

**0 061 819**
**B1**

(12) **EUROPEAN PATENT SPECIFICATION**

(45) Date of publication of patent specification: **17.04.85**

(21) Application number: **82300167.2**

(22) Date of filing: **13.01.82**

(51) Int. Cl.⁴: **G 21 C 19/06**

(54) Storage arrangements for nuclear fuel elements. ⫽

(30) Priority: **30.03.81 GB 8109904**

(43) Date of publication of application:
**06.10.82 Bulletin 82/40**

(45) Publication of the grant of the patent:
**17.04.85 Bulletin 85/16**

(84) Designated Contracting States:
**AT BE CH DE IT LI NL SE**

(56) References cited:
**GB-A-1 583 303**
**GB-A-2 044 662**
**GB-A-2 046 162**

(73) Proprietor: **THE ENGLISH ELECTRIC COMPANY**
**LIMITED**
**1, Stanhope Gate**
**London W1A 1EH (GB)**

(72) Inventor: **Deacon, David**
**28 Ladysmith Road Fox Meadows**
**Kirby Muxloe Leicester (GB)**

(74) Representative: **Kirby, Harold Victor Albert**
**Central Patent Department Wembley Office The**
**General Electric Company, p.l.c. Hirst Research**
**Centre East Lane**
**Wembley Middlesex HA9 7PP (GB)**

Courier Press, Leamington Spa, England.

## Description

This invention relates to storage arrangements for irradiated fuel following its removal from nuclear reactors. The invention can also relate to the storage of pre-irradiated fuel and also vitrified waste after spent fuel reprocessing.

It is a common practice to store spent fuel under water, in what are generally known as pond stores, for periods that are long enough to allow the decay heat and radiation levels to reduce sufficiently to allow the fuel to be transported with safety. However, the use of a pond store is not entirely satisfactory where the fuel needs to be stored for any considerable length of time.

Thus the ability to store the fuel safely for protracted periods in a water environment is very dependent upon the materials of the cladding in which the fuel is accommodated, the irradiation history of the fuel and/or the cladding, the integrity of the cladding, and the quality of the water in which the fuel is stored. Thus cooling and shielding functions can be carried out completely satisfactorily whilst the fuel cladding remains intact, and whilst the water is present. However if the fuel cladding is perforated by corrosion or handling, then fission products can escape and both fission products and corrosion products that are radioactively contaminated are then able to float and permeate to the surface of the water, which could result in high dose rates to operators. In addition it is possible for these fission products and corrosion/contamination products to adhere to the walls of the pond. Variations in the pond water level, due to evaporation or leakage, could allow these products to dry out, when they could then become airborne, causing possible ingestion hazards to operators and the risk of atmospheric pollution.

Moreover in order to maintain adequate cooling and shielding the pond integrity must be assured to very high limits. Small leaks could give rise to minor contamination problems, and larger leaks, resulting in loss of cooling water may result in a serious district hazard.

As safety requirements for nuclear installations become more rigorous, and the allowable dose rates to operators continue to decrease, the need to design storage systems and other nuclear installations to even higher orders of integrity becomes essential, particularly as for various reasons it is now becoming necessary to store spent nuclear fuel for longer periods than was originally anticipated.

In our co-pending United Kingdom Patent Application No. 8027066 (Serial No. 2061798) there is described and claimed an alternative form of storage arrangement which substantially avoids the above-mentioned disadvantages. Such a storage arrangement comprises an enclosure for the fuel that utilises air as its storage medium; an exhaust system for exhausting this air from the enclosure through filters so as to maintain the interior of the enclosure at sub-atmospheric pressure; and a transfer mechanism for transferring fuel into and from the enclosure.

As the fuel is stored in air rather than water, the risk of corrosion is reduced, and consequently the need for an operator to maintain the water chemistry at precise levels in order to prevent the generation of corrosion products.

A further form of dry storage arrangement is disclosed in United Kingdom Patent Specification No. 1583303, such an arrangement comprising a grid having a plurality of openings for supporting respective fuel cans so that they extend downwards therefrom, the space above the grid forming an air filled enclosure associated with an exhaust system for exhausting air from the space through filters to maintain the interior of the space at sub-atmospheric pressure, and the arrangement including means for producing a flow of cooling air over the exterior of the cans. In such an arrangement the fuel is first enclosed in the cans and the cans placed in openings in the grid, the unused openings being sealed with lids. However, the lids need to be removed for accommodating further cans, which is inconvenient, and failure of a can could give rise to the contamination of the cooling air, with the risk of polluting the atmosphere.

An object of the present invention is to provide a form of a dry storage arrangement which avoids these disadvantages and has other benefits as will be apparent from the following description.

According to the invention a storage arrangement for nuclear fuel comprises a plenum chamber having a base pierced with a plurality of openings, with respective containers extending downwards therefrom, the plenum chamber forming an air-filled enclosure associated with an exhaust system for exhausting air from the enclosure through filters so as to maintain the interior of the enclosure at sub-atmospheric pressure, and the arrangement including means for producing a flow of cooling fluid over the exterior of the containers, characterised in that each container comprises an open-topped tube sealed to a respective opening so as to form a fixed part of the storage arrangement and extending downwards into a further chamber, the plenum chamber and the interiors of the tubes constituting a common storage volume isolated from the further chamber, said further chamber, having at least one lower opening and at least one upper opening located adjacent opposite sides of the chamber, and communicating with separate upwardly extending ducts which are open to the atmosphere at spaced lower and upper positions respectively, such that air is caused to flow across the chamber and hence over the tube surfaces by a natural thermosyphon action, and the arrangement incorporating means for transferring fuel into and from the tubes through the roof of the plenum chamber.

As the plenum chamber and tubes form a common storage volume which is completely isolated from the space into which the tubes extend, the fuel does not have to be first accommodated in cans, which is clearly an advantage as the canning of the fuel involves an additional process and moreover removes the ability to check the fuel easily. Moreover the invention facilitates the monitoring and conditioning of the environment in which the fuel is stored. ·

The storage tubes themselves effectively form a plurality of heat exchangers which are in close proximity to the stored fuel.

It will, of course, be understood that the remainder of the enclosure around the main chamber should be of sufficient thickness to provide adequate radiation shielding.

For a given store geometry the amount of air flow is governed by the heat generated within the store, so that the cooling system is self regulating. As the cooling system is entirely separated from the plenum chamber housing the fuel no filtering of the cooling air is necessary, and the heated air can be discharged directly to the atmosphere.

Moreover as cooling is effected by purely natural processes, it will therefore be unaffected by breakdown of any external power supplies as would be the case if electrically driven fans or blowers were employed to produce a flow of air over the tube surfaces.

A further advantage of the present invention is that the stored fuel can readily be inspected through the loading openings in the plenum roof.

Conveniently the latter may comprise a plate supported for sliding movement on the side walls of the plenum chamber, and having a series of penetrations less than the number of storage tubes, each of which penetrations is normally closed by a plug, and the degree of movement of the plate and the positions of the penetrations are such that the plate is movable to a position in which a penetration is immediately over a selected storage tube, to allow fuel to be placed into or removed from the tube and a transfer mechanism located above the plenum chamber.

Monitors are preferably provided for detecting any rise in radiation levels within the plenum chamber and storage tubes, and also within the exhaust system. It will be understood that the filter associated therewith must, of course, be of a kind suitable for preventing escape of radiation and contamination from the enclosure as in the case of the arrangements described in our earlier application referred to above.

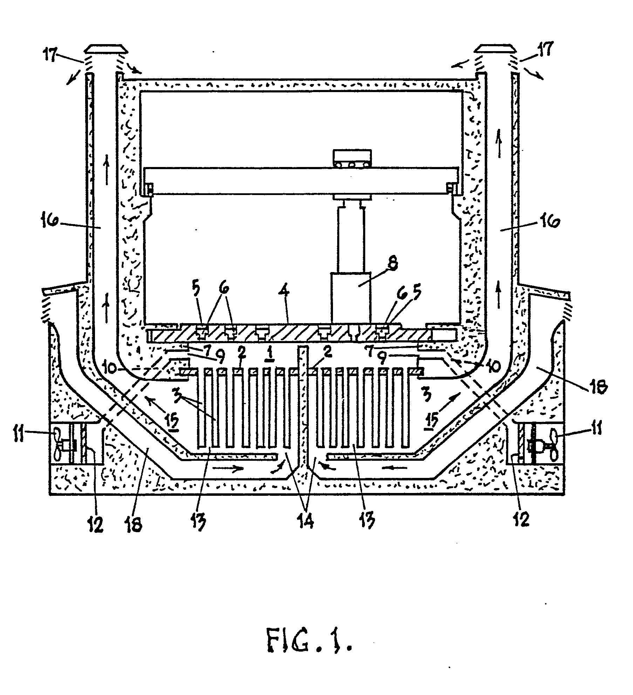

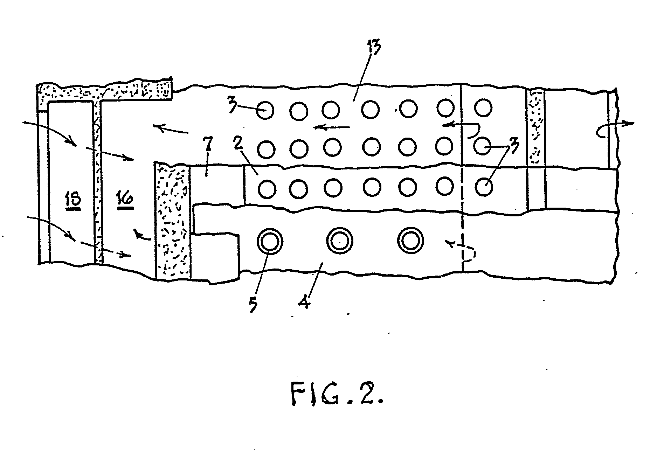

One form of storage arrangement in accordance with the invention will now be described by way of example with reference to Figures 1 and 2 of the accompanying schematic drawings, in which

Figure 1 represents in diagrammatic form and not to scale a transverse section through the storage arrangement, and

Figure 2 an enlarged sectional plan view of part of the arrangement.

The storage arrangement comprises a shallow plenum chamber 1 the base 2 of which is pierced by a series of openings into each of which is sealed the upper end of an open-topped metal storage tube 3, the lower end of which is closed. The top of the plenum chamber 1 is in the form of a thick plate 4 having a number of penetrations 5 which are closeable by removable plugs 6. The plate 4 is slidably supported by the side walls 7 of the plenum chamber so that a penetration 5 can be located immediately over a selected storage tube 3 to allow fuel to be deposited into or removed from the storage tube, following removal of the respective plug 6, by a movable transfer machine 8 supported above the plate 4.

The side walls 7 of the plenum chamber 1 are formed with a number of outlet openings 9 connected to ducts 10 through which air is arranged to be withdrawn from the chamber by exhauster fans shown schematically at 11 to maintain the interior of the plenum chamber 1, and hence of the tubes 3, at sub-atmospheric pressure, the air passing to the fans through suitable filters 12.

By maintaining a depression within the plenum chamber and tubes the need for a high integrity sealed envelope could be avoided, as any leakage that occurs will be inwards. The number and capacity of the exhauster fans are such as to provide adequate redundancy, to provide adequate integrity during breakdown and servicing, and by arranging a plurality of said outlet openings 9 to the exhauster fans at spaced positions around the enclosure, a sub-atmospheric pressure may be maintained within the plenum chamber even in cases where a region of its envelope becomes damaged to an extent which would otherwise give rise to significant leakage problems. It will also be seen that the plugs 6 do not need to seal the penetrations 5 in the plate 4.

Monitors (not shown) are provided at suitable positions within the plenum chamber and storage tubes, and in association with each of the fan ducts in order to detect any significant rise in the level of radiation and contamination.

The storage tubes 3 extend downwards into chambers 13 (two of which are shown in Figure 1), each chamber having an air inlet opening 14 at the bottom and one side, and an outlet opening 15 at the opposite side communicating with an upwardly extending vertical duct 16 open to the atmosphere through louvres 17 at its top end.

The inlet openings 14 are also in communication with the atmosphere through inlet ducts 18 and in use of the arrangement decay heat from spent fuel within the storage tubes 3 is transferred to the walls of the tubes by conduction, convection and radiation, and the heat is removed from the tubes to the atmosphere by a natural thermosyphon process, the heated air rising within the ducts 16 by convection, and being replaced by cooler air drawn into the chambers 13 through the inlet openings 14 and ducts 18, as indicated by the arrows, the inlet and outlet openings 14, 15 being disposed so that the air traversing the chambers 13 passes between the tubes 3.

It ·will be seen that the amount of air flow is governed by the heat generated within the store, and the arrangement is such that the cooling achieved is adequate to maintain the interior of the store at a safe temperature under all normal circumstances.

Stand-by fans or blowers may, however, be provided to give additional forced cooling should an abnormal temperature rise occur.

As the fuel elements are not bottled, inspection can be readily carried out, and removal of fuel from the store, should this become necessary, can be speedily effected.

The storage tubes 3 will normally be of circular cross section, but this is not essential and other shapes may alternatively be employed. In some cases the tubes may carry external cooling fins, preferably extending in a generally lengthwise direction along the tubes.

## Claims

1. A storage arrangement for nuclear fuel comprising a plenum chamber (1) having a base (2) pierced with a plurality of openings, with respective containers (3) extending downwards therefrom, the plenum chambers forming an air-filled enclosure associated with an exhaust system (10, 11, 12) for exhausting air from the enclosure through filters (12) so as to maintain the interior of the enclosure at sub-atmospheric pressure, and the arrangement including means (18, 14, 15, 16) for producing a flow of cooling fluid over the exterior of the containers, characterised in that each container comprises an open-topped tube (3) sealed to a respective opening so as to form a fixed part of the storage arrangement and extending downwards into a further chamber (13), the plenum chamber (1) and the interiors of the tubes constituting a common storage volume isolated from the further chamber (13), said further chamber, having at least one lower opening (14) and at least one upper opening (15) located adjacent opposite sides of the chamber, and communicating with separate upwardly extending ducts (18, 16) which are open to the atmosphere at spaced lower and upper positions respectively, such that air is caused to flow across the chamber and hence over the tube surfaces by a natural thermosyphon action, and the arrangement incorporating means for transferring fuel into and from the tubes through the roof of the plenum chamber.

2. A storage arrangement according to Claim 1 characterised in that the roof (4) of the plenum chamber (1) comprises a plate supported for sliding movement on the side walls (7) of the plenum chamber, and having a series of penetrations (5) less than the number of storage tubes, each of the penetrations normally being closed by a plug (6), and the degree of movement of the plate and the positions of the penetrations being such that the plate is movable to a position in which a penetration is immediately over a selected storage tube, to allow fuel to be placed into or removed from the tube by a transfer mechanism located above the plenum chamber.

3. A storage arrangement according to Claim 1 or 2 characterised in that monitors are provided for detecting any rise in radiation levels within the common volume provided by the plenum chamber and storage tubes, and also within the exhaust system.

4. A storage arrangement according to any preceding Claim characterised in that the tubes are provided with external cooling fins.

5. A storage arrangement according to Claim 4 characterised in that the cooling fins extend in a generally lengthwise direction along the tubes.

## Patentansprüche

1. Lagerungseinrichtung für Kernbrennstoff mit einer Füllkammer (1), die einen Boden (2) mit mehreren durchgehenden Öffnungen, von denen sich jeweils ein Behälter (3) nach unten erstreckt, aufweist, und ein luftgefüllte Umhüllung bildet, die mit einem Absaugsystem (10, 11, 12) zum Absaugen von Luft verbunden ist, um das Innere der Umhüllung unterhalb des Atmosphärendrucks zu halten, und mit Mitteln (18, 14, 15, 16) zum Erzeugen eines Kühlfluidstroms über das Äußere der Behälter hinweg, dadurch gekennzeichnet, daß jeder Behälter ein oben offenes Rohr (3) aufweist, das jeweils an einer der Öffnungen dicht befestigt ist, so daß er einen feststehenden Teil der Lagerungseinrichtung bildet und sich nach unten in eine weitere Kammer (13) erstreckt, daß die Füllkammer (1) und das Innere der Rohre eine gemeinsamen Lagerraum bilden, der von der weiteren Kammer (13) isoliert ist, daß die weitere Kammer wenigstens eine untere Öffnung (14) und wenigstens eine obere Öffnung (15) aufweist, die auf sich gegenüberliegenden benachbarten Seiten der Kammer angeordnet sind und mit getrennten nach oben verlaufenden Kanälen (18, 16) in Verbindung stehen, die jeweils an auseinanderliegenden oberen und unteren Stellen ins Freie münden, so daß ein Luftstrom durch die Kammer und mithin über die Oberflächen der Rohre durch einen natürlichen thermischen Auftrieb erzwungen wird, und daß die Einrichtung Mittel zum Transferieren von Brennstoff in die Rohre und aus den Rohren durch das Dach der Füllkammer hindurch aufweist.

2. Lagerungseinrichtung nach Anspruch 1, dadurch gekennzeichnet, daß das Dach (4) der Füllkammer (1) eine auf den Seitenwänden (7) der Füllkammer vershiebbar gelagerte Platte mit einer Reihe von Durchbrüchen (5) aufweist, deren Anzahl kleiner als die Anzahl der Lagerungsrohre ist, wobei jeder der Durchbrüche normalerweise durch eine Stopfen (6) verschlossen ist und das Ausmaß der Verschiebung der Platte und die Positionen der Durchbrüche so gewählt sind, daß die Platte in eine Position verschiebbar ist, in der ein Durchbruch unmittelbar über einen ausgewählten Lagerungsrohr liegt, um Brennstoff in das oder aus dem Rohr durch einen Transfermechanismus transferieren zu können, der über der Füllkammer angeordnet ist.

3. Lagerungseinrichtung nach Anspruch 1 oder 2, dadurch gekennzeichnet, daß Monitore vorgesehen sind zum Feststellen eines Anstiegs von Strahlungspegeln innerhalb des gemeinsamen Raumes, der durch die Füllkammer und die Lagerungsrohre gebildet wird, und auch innerhalb des Absaugsystems.

4. Lagerungseinrichtung nach einem der vorstehenden Ansprüche, dadurch gekennzeichnet, daß die Rohre mit äußeren Kühlrippen versehen sind.

5. Lagerungseinrichtung nach Anspruch 4, dadurch gekennzeichnet, daß sich die Kühlrippen weitgehend in Längsrichtung der Rohre erstrecken.

**Revendications**

1. Installation de stockage pour combustible nucléaire comprenant une chambre collectrice (1) présentant un fond (2) percé de plusieurs orifices d'où partent vers le base des récipients (3) respectifs, la chambre collectrice formant une enceinte remplie d'air et associée à une système (10, 11, 12) destiné à évacuer l'air de ladite enceinte à travers des filtres (12) de façon à maintenir l'intérieur de l'enceinte à une pression inférieure à la pression atmosphérique, et l'agencement comprenant un dispositif (18, 14, 15, 16) destiné à produire une circulation de fluide de refroidissement sur les surfaces externes des récipients, installation caractérisée en ce que chaque récipient comprend un tube (3) à extrémité ouverte, relie de façon étanche à un orifice respectif de manière à former une partie fixe de l'installation de stockage et se prolongeant vers le bas dans une chambre (13) supplémentaire, la chambre collectrice (1) et les intérieurs des tubes constituant un volume commun de stockage isolé de la chambre (13) supplémentaire, ladite chambre supplémentaire comportant au moins une ouverture (14) inférieure et au moins une ouverture (15) supérieure située près des côtés opposés de la chambre et communiquant avec des conduits (18, 16) séparés s'étendant vers le haut, qui s'ouvrent à l'atmosphère en des positions espacées inférieure et supérieure respectivement, de façon que l'air soit obligé de circuler dans la chambre et, de là, sur les surfaces des tubes par une action naturelle de type thermosiphon, et l'installation comprenent un dispositif destiné à transférer du combustible dans les tubes et hors de ces derniers à travers la voûte de la chambre collectrice.

2. Installation de stockage selon la revendication 1, caractérisée en ce que la voûte (4) de la chambre collectrice (1) est constituée par une plaque supportée pour effectuer un mouvement coulissant sur les parois latérales (7) de la chambre collectrice, et présentant plusieurs trous (5) dont le nombre est inférieur à celui des tubes de stockage, chacun des trous étant normalement fermé par un bouchon (6), et le degrée de déplacement de la plaque et les positions des trous étant tels que la plaque peut être amenée à une position dans laquelle un trou se trouve directement au-dessus d'un tube de stockage sélectionné, pour permettre de placer du combustible dans le tube ou de l'extraire de ce dernier au moyen d'une mécanisme de transfert placé au-dessus de la chambre collectrice.

3. Installation de stockage selon la revendication 1 ou 2, caractérisée en ce que des moniteurs sont destinés à détecter toute augmentation des niveaux de radiation au sein du volume commun constitué par la chambre collectrice et les tubes de stockage, et aussi au sein du système d'évacuation.

4. Installation de stockage selon l'une quelconque des revendications précédentes, caractérisée en ce que les tube comportent des ailettes externes de refroidissement.

5. Installation de stockage selon la revendication 4, caractérisée en ce que les ailettes de refroidissement s'étendent dans une direction généralement longitudinale le long des tubes.

FIG. 1.

FIG.2.